# EUROPÄISCHE PATENTSCHRIFT

(11) **EP 0 459 024 B1**
(45) Veröffentlichungstag und Bekanntmachung des Hinweises auf die Patenterteilung: **20.04.1994**
(21) Anmeldenummer: 90123454.2
(22) Anmeldetag: 06.12.1990
(51) Int. Cl.: B23K 1/20

(54) **Verfahren zum Entfernen von Flussmittelresten**
Flux removal method
Méthode d'enlèvement de reliquats de flux

(30) Priorität: 28.05.1990 DE 4017158
(43) Veröffentlichungstag der Anmeldung: 04.12.1991
(73) Patentinhaber: SIEMENS AKTIENGESELLSCHAFT, 80333 München (DE)
(72) Erfinder: Rombauer, Theodoro, W-8000 München 60 (DE)

(56) Entgegenhaltungen:
- EP-A- 0 161 346
- DE-A- 2 309 873
- Keine einschlägigen Dokumente gefunden

## Beschreibung

Die Erfindung betrifft ein Verfahren zum Entfernen von Flußmittelresten von einer durch elektrische Widerstandswärme erhitzbaren Bügelelektrode.

Lötvorrichtungen mit an einem Lötbügelhalter befestigten und durch elektrische Widerstandswärme erhitzbaren Bügelelektroden sind beispielsweise aus der DE-A-31 49 236, der DE-A-28 18 958 oder der EP-A-0 011 046 bekannt. Dabei werden solche Lötvorrichtungen mit zwei parallel einander gegenüberliegenden oder mit vier paarweise einander gegenüberliegenden Bügelelektroden insbesondere für das Auflöten hochpoliger elektronischer Bauelemente wie Mikropacks, Flatpacks und dergleichen eingesetzt. Wird eine derartige Lötvorrichtung zusätzlich mit einer mittig zwischen den Bügelelektroden angeordneten Saugpipette ausgerüstet, so kann diese für die automatische Bestückung der Leiterplatten mit den aufzulötenden Bauelementen herangezogen werden. Bei der Bestückung nach dem sogenannten Pick & Place Prinzip bewegt sich der kombinierte Bestück- und Lötkopf über den Zuführmodulen der Bauelemente und der im Bestückbereich angeordneten Leiterplatte, wobei die Saugpipette das jeweilige Bauelement aus einem Zuführmodul aufnimmt und in der vorgegebenen Bestückposition auf der Leiterplatte absetzt. Nach dem Absetzen des jeweiligen Bauelements wird dann der Lötbügelhalter abgesenkt, so daß sich sowohl vor dem Lötvorgang als auch während der gesamten Dauer des Lötvorganges ein möglichst sicherer Kontakt zwischen den Arbeitsflächen der Bügelelektroden, den Anschlußbeinchen des Bauelements und den Leiterbahnen bzw. Anschlußpads der Leiterplatte ergibt. Die Saugpipette kann bis zur Beendigung des Lötvorganges auf dem Bauelement verbleiben und dieses mit einer begrenzten Kraft gegen die Lötstelle auf der Leiterplatte drücken (DE-Z Feinwerktechnik & Messtechnik 96 (1988)9 S. 387 - 389).

Beim Auflöten hochpoliger elektronischer Bauelemente auf Leiterplatten werden in der Regel zur Vermeidung von Korrosion Harzflußmittel wie z.B. Kolophonium eingesetzt, wobei die Wirksamkeit dieser Flußmittel durch Zusätze erhöht werden kann. An den Bügelelektroden der Lötvorrichtung anhaftende Flußmittelreste müssen in regelmäßigen Zeitabständen durch Waschen entfernt werden. Je nach Zusammensetzung des verwendeten Flußmittels erfolgt das Waschen der Bügelelektroden in einer Lösung, die insbesondere Fluorchlorkohlenwasserstoffe enthält oder in Wasser. Der Reinigungsvorgang ist dabei mit einem beträchtlichen zeitlichen Aufwand verbunden. Außerdem ist die Verwendung von Fluorchlorkohlenwasserstoffen aus Gründen des Umweltschutzes zu vermeiden, während bei Verwendung von Wasser oder von wässrigen Reinigungslösungen die Gefahr von Korrosion besteht.

Aus der EP-A-0 161 346 ist es bekannt, zur Reinigung der Kupferspitze eines Lötkolbens eine mechanische Abschabeeinrichtung zu verwenden, die beispielsweise rotierende Abschabemittel in Form von flexiblen Bändern umfaßt. Durch die mechanische Reinigungseinrichtung erübrigt sich eine Anwendung von wässrigen Reinigungslösungen. Außerdem wird ein Temperaturabfall der Kupferspitze beim Reinigungsvorgang vermieden.

Der Erfindung liegt die Aufgabe zugrunde, ein Verfahren zum Entfernen von Flußmittellresten von einer durch elektrische Widerstandswärme erhitzbaren Bügelelektrode zu schaffen, welches eine umweltfreundliche, rasche und gründliche Reinigung der Bügelelektroden ermöglicht.

Diese Aufgabe wird erfindungsgemäß dadurch gelöst, daß die Bügelelektrode zur thermischen Zersetzung der Flußmittelreste auf eine oberhalb der maximalen Löttemperatur liegende Temperatur erhitzt wird.

Aus der DE-A-2 309 873 ist ein Verfahren zum selbsttätigen Reinigen der Innenwände eines Backofens bekannt, bei welchem der Ofenraum zur thermischen Zersetzung von Speiseresten auf Temperaturen über der normalen Brat- oder Backtemperatur erhitzt wird. Die zu reinigenden Innenwände werden hier also innerhalb des geschlossenen Ofenraumes durch Konvektion erhitzt.

Unter dem Begriff "maximale Löttemperatur" ist bei dem vorliegenden Verfahren eine Temperatur zu verstehen, oberhalb der das Lot, das Werkstück oder das Flußmittel geschädigt werden. Bei einem konventionellen Einsatz der Lötvorrichtung zu vermeidende, oberhalb der maximalen Löttemperatur liegende Temperaturen werden bei dem erfindungsgemäßen Verfahren bewußt dazu eingesetzt, die an der Bügelelektrode anhaftenden Flußmittelreste thermisch zu zersetzen. Die resultierenden Zersetzungsprodukte weisen dann eine derartige pulverförmige Beschaffenheit auf, das sie von selbst nach unten rieseln oder zumindest leicht abgebürstet werden können. Da die thermische Zersetzung der Flußmittelreste in wenigen Sekunden vorgenommen werden kann, kommt es durch den Reinigungsvorgang zu keiner wesentlichen Beeinträchtigung des Fertigungsablaufes. Wird die thermische Zersetzung in einer Sauerstoffatmosphäre oder in einer sauerstoffreichen Atmosphäre vorgenommen, so kann der Reinigungsvorgang noch rascher durchgeführt werden.

### Beispiel:

Beim Auflöten hochpoliger elektronischer Bauelemente auf Leiterplatten wird das Flußmittel
Circures Standart L3
der Firma Chemical Products eingesetzt, welches DIN 8511 Typ FSW 34 entspricht.

Die eingesetzte Lötvorrichtung besitzt vier paarweise einander gegenüberliegende Bügelelektroden aus einer Ni-Fe-Co-Einschmelzlegierung (Vacon 10 der Vacuumschmelze GbmH) deren Arbeitsflächen jeweils mit einer dünnen Keramikbeschichtung versehen sind. Zur thermischen Zersetzung der an den Bügelelektroden anhaftenden Flußmittelreste werden die Bügelelektroden über die normale elektrische Impulsbeheizung auf eine Temperatur von ca. 750°C erhitzt, wobei die Dauer des Aufheizens ca. 18 Sekunden beträgt. In dieser Zeit zersetzen sich die Flußmittelreste zu Asche, die sich selbsttätig von den Bügelelektroden löst oder zumindest leicht abgebürstet werden kann. Werden die Bügelelektroden während des Aufheizvorganges in ein mit reinem Sauerstoff gespültes Gefäß eingetaucht, so kann hierdurch die Dauer des Aufheizens auf ca. 9 Sekunden verkürzt werden.

## Patentansprüche

1. Verfahren zum Entfernen von Flußmittelresten von einer durch elektrische Widerstandswärme erhitzbaren Bügelelektrode ,
**dadurch gekennzeichnet,** daß die Bügelelektrode zur thermischen Zersetzung der Flußmittelreste auf eine oberhalb der maximalen Löttemperatur liegende Temperatur erhitzt wird.

2. Verfahren nach Anspruch 1,
**dadurch gekennzeichnet,** daß die thermische Zersetzung in einer Sauerstoffatmosphäre oder in einer sauerstoffreichen Atmosphäre vorgenommen wird.

3. Verfahren nach Anspruch 1 oder 2,
**dadurch gekennzeichnet,** daß die Zersetzungsprodukte von der Bügelelektrode abgebürstet werden.

## Claims

1. Method for removing flux residues from a soldering iron electrode which can be heated by electrical resistance heat, characterized in that the soldering iron electrode is heated to a temperature which is above the maximum soldering temperature, for thermal decomposition of the flux residue.

2. Method according to Claim 1, characterized in that the thermal decomposition is carried out in an oxygen atmosphere or in an oxygen-rich atmosphere.

3. Method according to Claim 1 or 2, characterized in that the decomposition products are brushed off the soldering iron electrode.

## Revendications

1. Procédé d'élimination de résidus de flux d'une électrode en forme d'étrier, qui peut être chauffée par de la chaleur de résistance électrique, caractérisé en ce qu'il consiste à porter l'électrode en forme d'étrier, en vue de décomposer thermiquement les résidus de flux, à une température supérieure à la température maximum de brasure.

2. Procédé suivant la revendication 1, caractérisé en ce qu'il consiste à effectuer la décomposition thermique dans une atmosphère d'oxygène ou dans une atmosphère riche en oxygène.

3. Procédé suivant la revendication 1 ou 2, caractérisé en ce qu'il consiste à enlever les produits de décomposition de l'électrode en forme d'étrier par brossage.
